# EUROPÄISCHE PATENTANMELDUNG

(11) **EP 2 704 274 A1**
(43) Veröffentlichungstag der Anmeldung: **05.03.2014**
(21) Anmeldenummer: 13176272.6
(22) Anmeldetag: 12.07.2013
(51) Int. Cl.: H02B 1/052

(54) **Schieber für ein modulares Reiheneinbaugerät, modulares Reiheneinbaugerät sowie Sammelschienenverbund**

(30) Priorität: 31.08.2012 DE 102012215470; 26.06.2013 DE 102013212335
(71) Anmelder: Siemens Aktiengesellschaft, 80333 München (DE)
(72) Erfinder: Neumeier, Michael, 93047 Regensburg (DE); Sturm, Tobias, 93109 Wiesent (DE); Weber, Christoph, 84061 Ergoldsbach (DE)

(57) **Zusammenfassung**

Die Erfindung betrifft einen Schieber (40) für ein modulares Reiheneinbaugerät (10), welches für die Verwendung in einem Sammelschienenverbund ausgebildet ist, wobei der Schieber (40) zur Verriegelung des Reiheneinbaugerätes (10) an einer Befestigungsschiene (120) dient, wobei der Schieber (40) eine Befestigungseinrichtung (45) zum verliersicheren Befestigen des Schiebers (40) an dem Reiheneinbaugerät (10) aufweist. Ferner betrifft die Erfindung ein modulares Reiheneinbaugerät (10) mit einem derartigen Schieber (40) sowie ein Sammelschienenverbund.

## Beschreibung

Die vorliegende Erfindung betrifft einen Schieber für ein modulares Reiheneinbaugerät, welches für die Verwendung in einem Sammelschienenverbund ausgebildet ist, wobei der Schieber beim Erreichen einer verriegelnden Position relativ zum Reiheneinbaugerät für die Verriegelung des Reiheneinbaugerätes im Sammelschienenverbund, insbesondere an einer Hutschiene, dient. Ferner betrifft die Erfindung ein modulares Reiheneinbaugerät für die Verwendung in einem Sammelschienenverbund, aufweisend einen Funktionsanschluss für den Anschluss eines Leiters, eine Abdeckung des Funktionsabschlusses mit einer Öffnung für die Durchführung des Leiters und einen Schieber für die Verriegelung des Reiheneinbaugerätes im Sammelschienenverbund, insbesondere an einer Hutschiene. Des Weiteren betrifft die Erfindung einen Sammelschienenverbund aufweisend wenigstens zwei modulare Reiheneinbaugeräte.

Modulare Reiheneinbaugeräte für Sammelschienenverbünde sind bekannt. Sie werden zum Beispiel in Form von Leitungsschutzschaltern oder Leistungsschaltern in Schaltschränken eingesetzt, um Leitungen miteinander zu verbinden. Auch für Schutzmechanismen, wie zum Beispiel bei Sicherungsschaltern, können modulare Reiheneinbaugeräte in Schaltschränken eingesetzt werden. Bei bekannten modularen Reiheneinbaugeräten dieser Art ist es üblich, dass diese auf einer Befestigungsschiene, zum Beispiel in Form einer Hutschiene, befestigt werden. Hierfür weist ein solches modulares Reiheneinbaugerät eine Verriegelungsmechanik auf. Diese besitzt insbesondere einen Schieber, welcher zwischen einer verriegelnden und einer entriegelnden Position bezüglich der Hutschiene am modularen Reiheneinbaugerät hin- und herbewegbar ist. Die Bewegung dieses Schiebers erfolgt bei bekannten Reiheneinbaugeräten dadurch, dass mit Hilfe eines Werkzeugs, zum Beispiel einem Schraubendreher, der Schieber in die gewünschte Freigabeposition gebracht wird, um das Reiheneinbaugerät von der Befestigungsschiene zu lösen. Darüber hinaus weisen bekannte Reiheneinbaugeräte Abdeckungen auf, die einen Funktionsanschluss des Reiheneinbaugerätes abdecken. Unter einem solchen Funktionsanschluss ist die Anschlussmöglichkeit eines Leiters zu verstehen. Solche Abdeckungen sind insbesondere mit Öffnungen versehen, um einen Leiter durch diese Abdeckung hindurch zum Funktionsanschluss hindurchführen zu können. Der Funktionsanschluss dient also zum Anklemmen oder Befestigen eines Leiters am Reiheneinbaugerät.

Ein Ziel bei modularen Reiheneinbaugeräten ist es, dass diese aus dem Sammelschienenverbund lösbar sind, um den Kundennutzen der Reiheneinbaugeräte zu steigern. Wenn ein Reiheneinbaugerät aus dem Verbund ausgetauscht werden soll, sollte also nicht jedes Reiheneinbaugerät aufgeschraubt und die Sammelschiene entfernt werden, sondern lediglich das gewünscht Reiheneinbaugerät sollte von der Hutschiene gelöst werden. Zum Demontieren sollte der Schieber von der Vorderseite des Reiheneinbaugeräts aus werkzeuglos entriegelbar sein. Bei höherwertigen Leitungsschutzschaltern mit 125A Bemessungsstrom soll der Kunde ferner die Möglichkeit haben selbständig zwischen Klemmen- und Ringkabelschuhtechnik zu wechseln. Das bedeutet, dass der Kunde entweder die im Auslieferungszustand montierte Klemme verwendet, um Leiter anzuklemmen, oder die komplette Klemmentechnik, das heißt den Funktionsanschluss, entfernt und Leiter am Anschluss festschraubt, die mit einem Ringkabelschuh versehen sind. Dazu muss die Abdeckung der Klemme für den Kunden demontierbar sein.

Aus der DE 10 2011 082 953 A1 ist ein modulares Reiheneinbaugerät für die Verwendung in einem Sammelschienenverbund bekannt. Das Reiheneinbaugerät wird mittels eines Schiebers an dem Sammelschienenverbund, insbesondere einer Befestigungsschiene, befestigt. Der Schieber ist mit einer Abdeckung für den Funktionsanschluss gekoppelt, so dass die Abdeckung zur Verschiebung des Schiebers genutzt werden kann. Es ist jedoch bei diesem Reiheneinbaugerät nachteilig für einen zu erkennen, wann der Schieber die verriegelnde Position eingenommen hat. Besonders nachteilig ist es, dass der Schieber in der entriegelnden Position aus dem Reiheneinbaugerät herausfallen kann. Die Stahlfeder, die im Inneren des Schiebers vorgesehen ist, drückt den Schieber aus dem Reiheneinbaugerät heraus. Der Benutzer, insbesondere ein Monteur, muss die mit dem Schieber gekoppelte Abdeckung permanent an das Reiheneinbaugerät drücken, damit der Schieber nicht aus dem Reiheneinbaugerät herausrutscht. Hierdurch hat der Monteur nicht beide Hände frei, um beispielsweise den Funktionsanschluss des Reiheneinbaugerätes zu wechseln.

Es ist Aufgabe der vorliegenden Erfindung die voranstehenden Nachteile bekannter Reiheneinbaugeräte zumindest teilweise zu beheben. Insbesondere ist es Aufgabe der vorliegenden Erfindung einen Schieber, ein modulares Reiheneinbaugerät und einen Sammelschienenverbund zur Verfügung zu stellen, welche eine einfache und kostengünstige Lösung ermöglichen, um einen Austausch des Reiheneinbaugerätes und/oder einen Austausch des Funktionsanschlusses am Reiheneinbaugerät vornehmen zu können, ohne dass der Schieber dem hinderlich ist.

Voranstehende Aufgabe wird gelöst, durch einen Schieber für ein modulares Reiheneinbaugerät mit den Merkmalen des unabhängigen Anspruchs 1, ein modulares Reiheneinbaugerät mit den Merkmalen des unabhängigen Anspruchs 6 sowie durch einen Sammelschienenverbund mit den Merkmalen des unabhängigen Anspruchs 15. Weitere Merkmale und Details der Erfindung ergeben sich aus den Untersprüchen, der Beschreibung und den Zeichnungen. Dabei gelten Merkmale und Details, die im Zusammenhang mit dem erfindungsgemäßen Schieber beschrieben sind, selbstverständlich auch im Zusammenhang mit dem erfindungsgemäßen Reiheneinbaugerät sowie dem erfindungsgemäßen Sammelschienenverbund und jeweils umgekehrt, so dass bezüglich der Offenbarung zu den einzelnen Erfindungsaspekten stets wechselseitig Bezug genommen wird beziehungsweise werden kann.

Die Aufgabe wird gelöst durch einen Schieber für ein modulares Reiheneinbaugerät, welches für die Verwendung in einem Sammelschienenverbund ausgebildet ist, wobei der Schieber zur Verriegelung des Reiheneinbaugerätes an einer Befestigungsschiene, insbesondere einer Hutschiene, dient. Der Schieber ist dadurch gekennzeichnet, dass er eine Befestigungseinrichtung zum verliersicheren Befestigen des Schiebers an dem Reiheneinbaugerät aufweist. Hierdurch ist sichergestellt, dass der Monteur leicht erkennt, dass der Schieber relativ zum Reiheneinbaugerät die verliersichere Position erreicht hat. Das heißt, durch die Befestigungseinrichtung kann sichergestellt werden, dass der Schieber nach Erreichen einer bestimmten Position, in der die Befestigungseinrichtung in eine entsprechende komplementär ausgebildete Gegenbefestigungseinrichtung im Gehäuse des Reiheneinbaugerätes eingreift, nicht mehr von dem Reiheneinbaugerät gelöst werden kann. Der Schieber kann zwar relativ zum Reiheneinbaugerät bewegt werden, so dass der Schieber an einer Befestigungsschiene befestigt beziehungsweise von dieser wieder gelöst werden kann. Die Befestigungseinrichtung stellt jedoch in Zusammenspiel mit der Gegenbefestigungseinrichtung im Gehäuse des Reiheneinbaugerätes sicher, dass der Schieber nicht vollständig von dem Reiheneinbaugerät gelöst werden kann. Die Befestigungseinrichtung dient dazu den Schieber nach der Montage an dem Reiheneinbaugerät im Reiheneinbaugerät verliersicher zu halten.

Besonders vorteilhaft ist es, dass der Schieber nach dem Lösen von der Befestigungsschiene verliersicher an dem Reiheneinbaugerät gehalten ist. Die Befestigungseinrichtung des Schiebers ermöglicht im Zusammenspiel wenigstens einer Gegenbefestigungseinrichtung des Reiheneinbaugerätes, dass der Schieber nicht nur in einer verriegelten Position, sondern auch in der entriegelten Position verliersicher an dem Reiheneinbaugerät, insbesondere an dem Gehäuse des Reiheneinbaugerätes, gehalten ist. Wird das Reiheneinbaugerät von der Befestigungsschiene gelöst, ist durch die Befestigungseinrichtung gewährleistet, dass diese eine kraft- und/oder formschlüssige Verbindung zu einer Gegenbefestigungseinrichtung des Reiheneinbaugerätes eingeht und dadurch den Schieber an dem Reiheneinbaugerät hält, so dass dieser nicht aus dem Einschub des Reiheneinbaugerätes herausrutschen kann. Ein Monteur kann den Schieber von der Befestigungsschiene, beispielsweise einer Hutschiene, des Sammelschienenverbundes lösen, das Reiheneinbaugerät aus dem Sammelschienenverbund entfernen und die Abdeckung des Reiheneinbaugerätes zum Tauschen eines Funktionsanschlusses vom Reiheneinbaugerät lösen, ohne dass der Schieber verloren geht. Dieser wird in der entriegelten Position durch die Befestigungseinrichtung an dem Reiheneinbaugerät gehalten.

Die entriegelte Position ist im Sinne der Erfindung eine Position des Schiebers relativ zum Reiheneinbaugerät, die unterschiedlich zu der verriegelten Position ist. In der verriegelten Position kontaktiert der Schieber eine Befestigungsschiene. In der entriegelten Position ist der Schieber in Richtung der Abdeckung des Reiheneinbaugerätes bewegt und beabstandet zu der verriegelten Position. Die entriegelte Position ist vorzugsweise so bemessen, dass der Schieber weiterhin in einem Einschub des Reiheneinbaugerätes bewegbar geführt ist, d.h. zumindest ein Teil des Schiebers weiterhin in oder an dem Reiheneinbaugerät gehalten ist.

Ein derartig ausgebildeter Schieber ermöglicht eine einfache Montage des Schiebers am Reiheneinbaugerät. Insbesondere kann ein derartiger Schieber in der Fertigung auch bei einem vernieteten Reiheneinbaugerät einfach eingesetzt werden. Der Schieber wird dabei in einen entsprechenden Einschub oder eine entsprechende Führung eingeschoben werden, bis die Befestigungseinrichtung in Eingriff mit der wenigstens einen Gegenbefestigungseinrichtung gelangt und der Monteur weiß, dass nach dem Eingriff der Befestigungseinrichtung an der wenigstens einen Gegenbefestigungseinrichtung der Schieber verliersicher an dem Reiheneinbaugerät gehalten ist. Ein Monteur kann aufgrund des verliersicheren Haltens des Schiebers an dem Reiheneinbaugerät einfach einen Wechsel eines Funktionsanschlusses des Reiheneinbaugerätes vornehmen, beispielsweise von einem Klemmanschluss zu einem Ringkabelschuhanschluss wechseln. Der Schieber ermöglicht ein werkzeugloses Betätigen des Schiebers von vorne, das heißt von der Seite der Abdeckung. Besonders vorteilhaft weist der Schieber eine Schieberbetätigung auf. Das bedeutet, dass die Schieberbetätigung Teil des Schiebers sein kann. Dies kann über eine kraftschlüssige Verbindung, beispielsweise über eine Rastverbindung zwischen dem Schieber und der Schieberbetätigung, realisiert sein. Insbesondere über die Schieberbetätigung, die bevorzugt die Abdeckung des Funktionsanschluss ist, kann der Schieber werkzeuglos betätigt werden. Insbesondere kann die Schieberbetätigung einstückig, beispielsweise monolithisch, mit dem Schieber ausgebildet sein. Dabei ist besonderes bevorzugt, wenn die Schieberbetätigung über ein Gelenk, wie ein Filmscharnier, an dem Schieber angeordnet ist.

Die Befestigung des Schiebers an dem Reiheneinbaugerät, insbesondere dem Gehäuse des Reiheneinbaugerätes, kann verschiedenartig mittels der Befestigungseinrichtung erfolgen. Die Befestigungseinrichtung kann zur kraft- und/oder formschlüssigen Befestigung des Schiebers an wenigstens eine entsprechende Gegenbefestigungseinrichtung des Reiheneinbaugerätes ausgebildet sein. Beispielsweise kann ein Halten des Schiebers an dem Reiheneinbaugerät durch einen Klemmvorsprung an dem Schieber erfolgen. D.h., die Befestigungseinrichtung kann derartig ausgebildet und dimensioniert sein, dass diese mit entsprechenden Gegenbefestigungseinrichtungen des Reiheneinbaugerätes jeweils eine Klemmverbindung eingeht.

Ein erfindungsgemäßer Schieber zeichnet sich dadurch aus, dass die Befestigungseinrichtung wenigstens ein Rastelement, insbesondere wenigstens einen Rastvorsprung, aufweist. Die wenigstens eine Gegenbefestigungseinrichtung des Reiheneinbaugerätes ist entsprechend als Rastaufnahmen ausgebildet, in die das Rastelement, insbesondere der Rastvorsprung, einrasten kann. Bei Erreichen der verliersicheren Position verrastet das Rastelement an einer Gegenbefestigungseinrichtung, insbesondere einer Rastaufnahme, des Reiheneinbaugerätes. Der Monteur erkennt durch das Einrasten des Rastelementes in die entsprechende Rastaufnahme, dass die verliersichere Position erreicht ist.

In der verliersicheren Position kann der Schieber relativ zum Reiheneinbaugerät bewegt werden, so dass der Schieber an einer Befestigungsschiene verriegelt werden kann beziehungsweise von einer verriegelten Position an der Befestigungsschiene in eine entriegelte Position bewegt werden kann. Die Befestigung des Schiebers in der verriegelten Position an einer Befestigungsschiene ist lösbar, so dass der Schieber in die entriegelte Position überführt werden kann.

Es ist denkbar, dass ein Rastelement, beispielsweise in einer zentralen Position am dem Schieber angeordnet ist. Dies kann beispielsweise an der Oberseite oder der Unterseite sein. Gemäß einer besonders bevorzugten Weiterentwicklung der Erfindung kann bei einem Schieber vorgesehen sein, dass an jeder Seite des Schiebers ein Rastelement angeordnet ist. Hierdurch ist ein besonders sicheres Verrasten an dem Gehäuse des Reiheneinbaugerätes, insbesondere einem Einschub im Gehäuse des Reiheneinbaugerätes, gewährleistet. Die Rastelemente sind vorzugsweise direkt gegenüberliegend an dem Schieber ausgebildet. Ein derartig ausgebildeter Schieber ermöglicht auf eine einfach und kostengünstige Art und Weise, dass ein Monteur feststellen kann, ob der Schieber die verliersichere Position an dem Reiheneinbaugerät eingenommen hat. Er erhält durch das Verrasten eine haptische und ggf. auch eine akustische Rückmeldung und weiß dadurch, dass das Reiheneinbaugerät verliersicher an dem Reiheneinbaugerät gehalten ist. Durch das Fixieren des Schiebers an dem Reiheneinbaugerät in der verliersicheren Position kann der Nutzer des Reiheneinbaugerätes einfach den Funktionsanschluss des Reiheneinbaugerätes wechseln, ohne dass er ständig aufpassen muss, dass der Schieber nicht aus dem Reiheneinbaugerät herausfällt. Der Schieber kann mit der Abdeckung des Reiheneinbaugerätes gekoppelt sein, so dass die Abdeckung gleichzeitig auch als Betätiger zum Verriegeln oder Entriegeln des Schiebers dient. Ein erfindungsgemäßer Schieber zeichnet sich dadurch aus, dass der Schieber eine Schieberfeder aufweist, die einstückig, insbesondere monolithisch, mit dem Schieber ausgebildet ist, und dass der Schieber einen Rahmen und einen Abdeckungsabschnitt aufweist, an dem eine Abdeckung des Reiheneinbaugerätes anordenbar ist, die relativ zueinander gegen die Federkraft der Schieberfeder bewegbar sind. Diese Federkraft kann zum Beispiel durch die Ausbildung des Schiebers selbst erzeugt werden. Zum Beispiel können einzelne Bereiche des Schiebers als Federelemente ausgebildet sein, wie sie durch die federelastischen Rückstellkräfte einzelner Kunststoffmaterialien als Bauelemente des Schiebers zur Verfügung gestellt sein können. Es kann jedoch auch vorteilhaft sein, wenn eine separate Schieberfeder zum Beispiel in Form einer Stahlfeder, vorgesehen ist, um die gewünschte Federkraft zu erzeugen. Diese Ausführungsformen bringen den Vorteil mit sich, dass ein Einrasten also ein Verriegeln des Reiheneinbaugerätes an einer Befestigungsschiene erfolgen kann, ohne dass die Abdeckung zwischen der ersten und der zweiten Position bewegt wird. Dies kann auch als eine Art Schnapp-Rast-Verschluss verstanden werden. So kann das Reiheneinbaugerät auf die Befestigungsschiene aufgesetzt werden, ohne dass die Abdeckung variiert werden muss. Eine Verschiebung der Abdeckung erfolgt bei dieser Ausführungsform nur bei der Entnahme des Reiheneinbaugerätes von der Befestigungsschiene. Dies erleichtert die Einsetzbarkeit eines Reiheneinbaugerätes noch weiter und ermöglicht darüber hinaus die gleiche Funktionalität, wie sie beim Einsetzen bekannter Reiheneinbaugeräte einem Monteur bereits bekannt ist.

Ferner kann bei einem erfindungsgemäßen Schieber vorgesehen sein, dass der Abdeckungsabschnitt Rasteinrichtungen und der Rahmen Rastaufnahmen aufweisen, so dass der Abdeckungsabschnittmittels der Rasteinrichtungen an den Rastaufnahmen des Rahmens entgegen der Federkraft der Schieberfeder verrasten kann. Dies bedeutet, dass die Schieberfeder zwischen dem Rahmen und dem Abdeckungsabschnitt angeordnet ist. Hierdurch kann der Abdeckungsabschnitt relativ zum Riegelabschnitt bewegt werden.

Gemäß einem zweiten Aspekt der Erfindung wird die Aufgabe durch ein modulares Reiheneinbaugerät für die Verwendung in einem Sammelschienenverbund, aufweisend einen Funktionsanschluss für den Anschluss eines Leiters, eine Abdeckung des Funktionsabschlusses mit einer Öffnung für die Durchführung des Leiters und einen Schieber zur Verriegelung des Reiheneinbaugerätes an einer Befestigungsschiene, insbesondere an einer Hutschiene, gelöst. Das modulare Reiheneinbaugerät ist dadurch gekennzeichnet, dass der Schieber gemäß dem ersten Aspekt der Erfindung, d.h. gemäß einem der Ansprüche 1 bis 5, ausgebildet ist und dass das Reiheneinbaugerät das Reiheneinbaugerät wenigstens eine Gegenbefestigungseinrichtung zum Befestigen des Schiebers an dem Reiheneinbaugerät in der verliersicheren Position aufweist.

Das Reiheneinbaugerät weist zumindest eine Gegenbefestigungseinrichtung auf. Diese dient im Zusammenspiel mit der Befestigungseinrichtung des Schiebers für die verliersichere Arretierung des Schiebers an dem Reiheneinbaugerät. Die Gegenbefestigungseinrichtung des Reiheneinbaugerätes und die Befestigungseinrichtung des Schiebers sorgen dafür, dass der Schieber nicht aus dem Reiheneinbaugerät herausfällt, sondern beim Erreichen der verliersicheren Position fest am dem Reiheneinbaugerät gehalten wird. Hierdurch sitzt der Schieber auch nach dem Lösen des Reiheneinbaugerätes von einer Befestigungsschiene fest an dem Reiheneinbaugerät, wodurch andere Veränderungen an dem Reiheneinbaugerät, wie beispielsweise die Anschlusstechnik zum Anschluss eines Leiters, einfach vorgenommen werden können.
Die Gegenbefestigungseinrichtung ist vorzugsweise komplementär zu der Befestigungseinrichtung ausgebildet.
Ein erfindungsgemäßes Reiheneinbaugerät kann dahingehend weitergebildet sein, dass die Gegenbefestigungseinrichtung als Rastaufnahme, insbesondere als Vertiefung, in einem Gehäuseteil des Reiheneinbaugerätes ausgebildet ist. Bei einem alternativen Reiheneinbaugerät kann vorgesehen sein, dass die Befestigungseinrichtung des Schiebers als Rastaufnahme, beispielsweise als Vertiefung, und die Gegenbefestigungseinrichtung als Rastelement, beispielsweise als Rastvorsprung, ausgebildet ist.

Besonders vorteilhaft ist es, wenn bei einem erfindungsgemäßen Reiheneinbaugerät der Schieber und die Abdeckung miteinander lösbar verbunden sind. Mit anderen Worten handelt es sich um eine zweiteilige Ausbildung des Schiebers und der Abdeckung, so dass die Verbindung insbesondere reversibel lösbar ausgebildet ist. Dies führt dazu, dass die Abdeckung insbesondere bei einem aus einem Sammelschienenverbund entnommen Reiheneinbaugerät von dem Reiheneinbaugerät entfernbar ausgebildet ist. Der Schieber verbleibt am Reiheneinbaugerät. Durch diese Abnehmbarkeit der Abdeckung ist gewährleistet, dass der Funktionsanschluss bei freigelegtem Reiheneinbaugerät ideal zugänglich ist. Durch die abgenommene Abdeckung kann der Funktionsanschluss auf diese Weise austauschbar ausgestaltet sein, so dass der Nutzer eines erfindungsgemäßen Reiheneinbaugerätes die freie Wahl hat, welche Art von Funktionsanschluss er für dieses Reiheneinbaugerät einsetzen möchte. Ist die Abdeckung entfernt, kann der Funktionsanschluss ausgetauscht werden. Auch der Austausch der Abdeckung selbst ist auf diese Weise möglich. So kann nicht nur der Funktionsanschluss ausgetauscht werden, sondern darüber hinaus auch die Abdeckung an die Art des Funktionsanschlusses angepasst werden. Auf diese Weise kann eine Vielzahl unterschiedlicher Abdeckungen bei ein und demselben Reiheneinbaugerät zum Einsatz kommen, welche an die entsprechende Art des Funktionsanschlusses angepasst sind. Dabei handelt es sich bei den Funktionsanschlüssen insbesondere um einen Klemmenanschluss und/oder einen Ringkabelschuhanschluss. Die Abdeckung stellt vorzugsweise die Schieberbetätigung dar. Bevorzugt kann die Abdeckung beziehungsweise Schieberbetätigung Teil des Schiebers sein. Die Abdeckung beziehungsweise Schieberbetätigung ermöglicht ein werkzeugloses Betätigen des Schiebers.

Gemäß einer vorteilhaften Weiterbildung der Erfindung kann bei einem Reiheneinbaugerät vorgesehen sein, dass der Schieber und die Abdeckung über ein flexibles Schieberband miteinander verbunden sind. Über Rastpositionen ist für den Kunden erkennbar in welcher Stellung der Schieber sich relativ zum Reiheneinbaugerät beziehungsweise der Befestigungsschiene befindet. Für die Rastposition wird die Flexibilität des Schieberbandes ausgenutzt.

Eine andere vorteilhafte Weiterbildung des Reiheneinbaugerätes sieht vor, dass der Schieber und die Abdeckung einstückig, insbesondere monolithisch, ausgebildet sind. Einstückig können eine Abdeckung und ein Schieber zum Beispiel aus einem Kunststoffmaterial durch ein Spritzgussverfahren hergestellt sein. Auch bei mehrteiligen, insbesondere zweiteiligen Ausbildungen und anschließender Verbindung, können Kunststoffmaterialien, für den Schieber und die Abdeckungen zum Einsatz kommen. Die Verwendung von Kunststoff hat den Vorteil, dass dieser einerseits die Kosten für die Herstellung reduziert und andererseits elektrisch isolierende Eigenschaften aufweist.

Ein erfindungsgemäßes Reiheneinbaugerät kann dahingehend weitergebildet sein, dass das Reiheneinbaugerät Sichtfenster auf die Gegenbefestigungseinrichtungen aufweist. Hierdurch kann der Nutzer, beispielsweise ein Monteur, optisch erkennen, ob der Schieber die verliersichere Position eingenommen hat.

Des Weiteren kann bei einem erfindungsgemäßen Reiheneinbaugerät vorgesehen sein, dass der Funktionsanschluss auswechselbar hinter der Abdeckung angeordnet ist.

Auf diese Weise kann der Benutzer eines erfindungsgemäßen Reiheneinbaugerätes frei entscheiden, welche Art eines Funktionsanschlusses er bevorzugt. Die Austauschbarkeit ist insbesondere vor der ersten Montage gegeben, so dass vor der Montage des Reiheneinbaugerätes in einem Schaltschrank, insbesondere also an dem Sammelschienenverbund, ein Austausch beziehungsweise eine Auswahl des Funktionsanschlusses erfolgt. Dabei ist es möglich, dass der Funktionsanschluss ein Klemmenanschluss oder ein Ringkabelschuhanschluss ist. Diese beiden Varianten sind die häufigsten Einsatzmöglichkeiten für den Funktionsanschluss. Unter einem Klemmenanschluss ist ein Einklemmen eines abisolierten Endes eines Leiters zu verstehen. Hierfür sind Klemmbacken notwendig, die über ein Verstellmittel, zum Beispiel eine Verstellschraube beziehungsweise eine Klemmschraube, in der gewünschten Position gehalten werden. Auf diese Weise wird der Leiter mit dem Funktionsanschluss des Reiheneinbaugerätes mechanisch verbunden und ermöglicht damit eine elektrische Verbindung. Ein Ringkabelschuhanschluss ist deutlich breiter hinsichtlich der geometrischen Abmessungen, kann jedoch in mancher Einsatzsituation vorteilhaft sein. Durch den Funktionsanschluss mit einer Austauschbarkeit kann frei gewählt werden, ob ein Klemmenanschluss als Funktionsanschluss oder ein Ringkabelschuhanschluss als Funktionsanschluss eingesetzt werden soll.

Ebenfalls vorteilhaft kann es sein, wenn bei einem erfindungsgemäßen Reiheneinbaugerät die Öffnung derart in der Abdeckung angeordnet ist, dass ein durch die Öffnung hindurch geführter Leiter die Abdeckung daran hindert, von der ersten Position in die zweite Position bewegt zu werden. Damit wird die Abdeckung durch den Leiter sozusagen in der ersten Position gesichert. Auf diese Weise wird eine Entnahme des Reiheneinbaugerätes verhindert, wenn der Leiter sich noch in der Öffnung und damit im angeschlossenen Zustand am Funktionsanschluss befindet. Bei Reiheneinbaugeräten kann es nachteilhaft sein, wenn diese entnommen werden, solange sie sich noch im Leiterverbund des Sammelschienenverbundes befinden. Durch eine erfindungsgemäße Ausbildung ist sichergestellt, dass eine Entnahme jedes Reiheneinbaugerätes nur dann erfolgen kann, wenn der Leiter auch abgeklemmt ist. Es handelt sich also um eine mechanische Sicherung, wobei der Leiter als Funktionsmittel am Reiheneinbaugerät gleichzeitig die Sicherungsfunktion übernimmt. Dies ist insbesondere bei der Berücksichtigung der zwei Positionen der Abdeckung einstellbar, indem eine Blockade der Bewegung in Richtung der zweiten Position erzielt wird, wenn der Leiter durch die Öffnung hindurchragt.

Ein weiterer Vorteil kann es sein, wenn bei einem erfindungsgemäßen Reiheneinbaugerät der Schieber und/oder die Abdeckung wenigstens ein Filmscharnier aufweist, über welches die Bewegung der Abdeckung zwischen der ersten und der zweiten Position in eine andere Richtung umgelenkt wird bzw. werden kann. Üblicherweise kann bei einem Reiheneinbaugerät der Riegel in eine erste Ebene verschoben werden, während die Bewegung der Abdeckung vorzugsweise in einer zweiten Ebene erfolgt. Diese beiden Ebenen stehen häufig im Winkel, zum Beispiel senkrecht, zueinander. Das Vorsehen eines Filmscharniers ist eine Möglichkeit der Umlenkung der Zugkraft, die durch die Bewegung der Abdeckung auf das Scharnier übertragen wird. Diese Übertragungsmöglichkeit ist hinsichtlich der Konstruktionsweise besonders einfach und kostengünstig aufgeführt. Darüber hinaus kann auf diese Weise eine Anpassung an gegebene Geometrien bekannter Module für Sammelschienenverbunde vorgesehen werden, so dass ein erfindungsgemäßes modulares Reiheneinbaugerät auch bei bereits bestehenden Sammelschienenverbunden einsetzbar ist. Eine Kombination bekannter Reiheneinbaugeräte und erfindungsgemäßer Reiheneinbaugeräte wird auf diese Weise besonders einfach und insbesondere ohne Zusatzaufwand möglich.

Es kann von Vorteil sein, wenn bei einem erfindungsgemäßen Reiheneinbaugerät wenigstens ein Verbindungsmittel am Schieber zumindest abschnittsweise im Wesentlichen halbzylindrisch ausgebildet ist und die zumindest eine Verbindungsaufnahme an der Abdeckung eine zylinderförmige Vertiefung aufweist. Die zylinderförmige Vertiefung der Verbindungsaufnahme weist vorzugsweise in der Seitenwand einen Durchbruch auf, durch welchen das Verbindungsmittel aus der Verbindungsaufnahme herausgenommen werden kann. Der Durchbruch korrespondiert mit der halbzylindrischen Ausbildung des Schiebers. Dabei ist dieser Halbzylinder derart ausgerichtet, dass er nur in der dritten Position der Abdeckung relativ zum Schieber durch den Durchbruch hindurchpasst. Wird die Abdeckung um die Achse des Schiebers weiter rotiert, so verschiebt sich die Relation zwischen der Kontur des Halbzylinders und des Durchbruchs derart, dass ein Entnehmen durch den Durchbruch nicht mehr möglich ist. Vielmehr wird auf diese Weise die mechanische Verbindung zwischen der Abdeckung und dem Schieber in kraftschlüssiger Weise hergestellt. Bei der Bewegung zwischen der ersten und zweiten Position bleibt der Durchbruch also ohne Funktion und es erfolgt eine Kraftübertragung über die zylinderförmige Vertiefung der Verbindungsaufnahme und die halbzylindrischen Außenflächen des Verbindungsmittels. Dies stellt eine besonders einfache konstruktive Lösung dar, die insbesondere kostengünstig herstellbar ist, und gleichzeitig eine hohe Funktionalität hinsichtlich zwei beziehungsweise drei Positionen der Abdeckung ermöglicht.

Ein weiterer Gegenstand der vorliegenden Erfindung ist ein Sammelschienenverbund mit wenigstens zwei erfindungsgemäßen modularen Reiheneinbaugeräten und einer Befestigungsschiene, insbesondere in Form einer Hutschiene. In diese Befestigungsschiene oder an dieser Befestigungsschiene sind die Reiheneinbaugeräte über die jeweiligen Schieber der Reiheneinbaugeräte verriegelbar. Die Verwendung von wenigstens zwei erfindungsgemäßen modularen Reiheneinbaugeräten bringt die gleichen Vorteile mit sich, wie sie bereits ausführlich mit Bezug auf ein erfindungsgemäßes Reiheneinbaugerät erläutert worden sind.

Weitere Vorteile, Merkmale oder Einzelheiten der Erfindung ergeben sich aus der nachfolgenden Beschreibung, in welcher unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: eine perspektivische Ansicht eines erfindungsgemäßen Schiebers,
- Figur 2: eine Ausführungsform einer Abdeckung und eines Schiebers,
- Figur 3: eine Ausführungsform eines Reiheneinbaugerätes mit einem Schieber in verriegelnder Position,
- Figur 4: in einer Draufsicht einen erfindungsgemäßen Schieber in der entriegelnden Position,
- Figur 5: eine Ausführungsform des Reiheneinbaugerätes gemäß Fig. 3 während des Lösens des Schiebers von dem Sammelschienenverbund,
- Figur 6: eine Ausführungsform des Reiheneinbaugerätes gemäß Fig. 3 während des Lösens des Reiheneinbaugerätes von dem Sammelschienenverbund,
- Figur 7: Rastpositionen des Schiebers am Reiheneinbaugerät,
- Figur 8: eine perspektivische Ansicht einer Doppelkammerklemme,
- Figur 9: eine perspektivische Ansicht eines Reiheneinbaugerätes ohne Funktionsanschluss,
- Figur 10: eine perspektivische Ansicht eines Reiheneinbaugerätes mit Funktionsanschluss,
- Figur 11: eine perspektivische Ansicht eines Schiebers mit Abdeckung mit entlasteter Schieberfeder und
- Figur 12: eine perspektivische Ansicht eines Schiebers mit Abdeckung mit gespannter Schieberfeder.

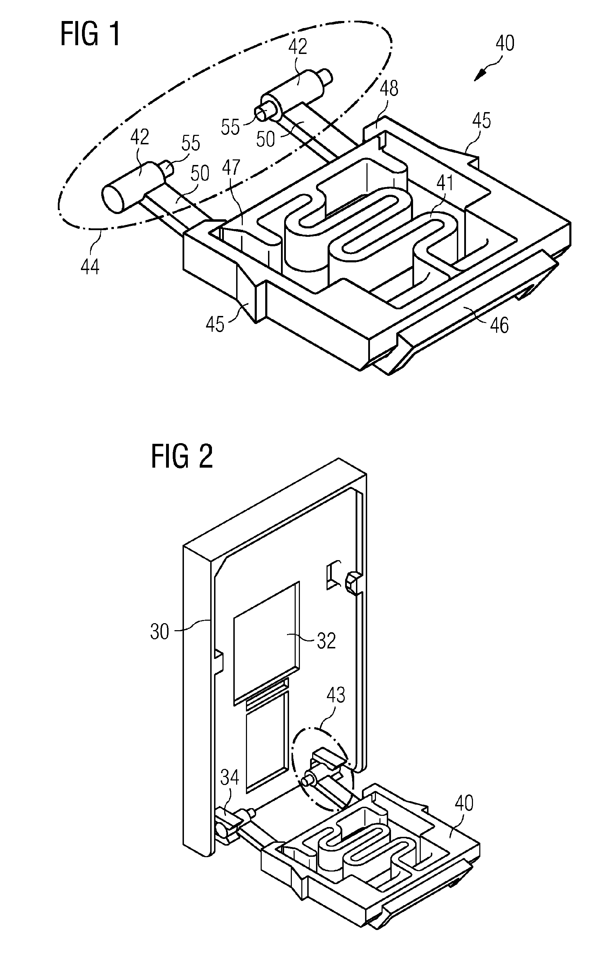

Elemente mit gleicher Funktion und Wirkungsweise sind in den Fig. 1 bis Fig. 12 jeweils mit denselben Bezugszeichen versehen.

Fig. 1 zeigt eine perspektivische Ansicht eines erfindungsgemäßen Schiebers 40. Der Schieber 40 weist einen Abdeckungsabschnitt 44 an dem eine Abdeckung 30 eines Reiheneinbaugerätes 10 gekoppelt werden kann und einen Rahmen auf, der zur Verriegelung des Schiebers 40 an einer Befestigungsschiene 120 dient. Der Abdeckungsabschnitt 44 weist vorzugsweise die Rasteinrichtungen 47, die flexiblen Schieberbänder 50, die Verbindungsmittel 42 und Verrastkonturen 55 an den Verbindungsmittel 42 auf. Im Inneren des Schiebers 40 ist die Schieberfeder 41 vorgesehen. Die Schieberfeder 41 kann Teil des Abdeckungsabschnittes 44 sein. Die Schieberfeder 41 ermöglicht eine relative Verschiebung des Rahmens, der vorzugsweise aus dem Riegelabschnitt 46, den Befestigungseinrichtungen 45 und den Rastaufnahmen 48 gebildet ist, zu dem Abdeckungsabschnitt 44 des Schiebers 40. Damit kann ein Einsetzen des Reiheneinbaugerätes 10 an einer Befestigungsschiene 120 erfolgen, ohne dass die Abdeckung 30 des Reiheneinbaugerätes 10 bewegt werden muss. Der Schieber 40 weist Verbindungsmittel 42 und Verrastkonturen 55 auf, über die der Schieber 40 mit der Abdeckung 30, siehe Fig.2, gekoppelt werden kann.

An den Seiten des Schiebers 40 weist der Schieber 40 Befestigungseinrichtungen 45 in Form von Rastelementen zum verliersicheren Befestigen des Schiebers 40 an einem Reiheneinbaugerät 10 in der entriegelten Position 61 auf. Das heißt, durch die Rastelemente 45 ist der Schieber 40 nach der Montage an einem Reiheneinbaugerät 10 verliersicher an dem Reiheneinbaugerät 10 befestigt. Die Befestigungseinrichtung 45 des Schiebers 40 ermöglicht dies im Zusammenspiel mit wenigstens einer Gegenbefestigungseinrichtung 22 des Reiheneinbaugerätes 10. Wird das Reiheneinbaugerät 10 von einer Befestigungsschiene 120 gelöst, ist durch die Rastelemente 45 gewährleistet, dass der Schieber 40 nicht verloren geht, sondern weiter mit dem Reiheneinbaugerät 10 verbunden bleibt. Die Befestigungseinrichtung 45 des Schiebers 40 geht eine kraft- und/oder formschlüssige Verbindung zu der Gegenbefestigungseinrichtung 22 eines Reiheneinbaugerätes 10 ein. Der Schieber 40 kann dann nicht aus dem Reiheneinbaugerät 10, insbesondere einem Einschub des Reiheneinbaugerätes 10, herausrutschen. Vorteilhaft ist bei einem derartig ausgebildeten Schieber 40, dass ein Monteur den Schieber 40 von der Befestigungsschiene 120, beispielsweise einer Hutschiene, des Sammelschienenverbundes lösen kann, das Reiheneinbaugerät 10 aus dem Sammelschienenverbund entfernen und die Abdeckung 30 des Reiheneinbaugerätes 10 zum Tauschen eines Funktionsanschlusses 20 vom Reiheneinbaugerät 10 lösen kann, ohne dass der Schieber 40 verloren geht.

In Fig. 2 ist ein Schieber 40 mit einer Abdeckung 30 dargestellt. Die Abdeckung 30 deckt einen Funktionsanschluss 20 des Reiheneinbaugerätes 10 ab. Die Abdeckung 30 weist eine Öffnung 32 auf, um einen Leiter durch diese Abdeckung 30 hindurch zum Funktionsanschluss 20 des Reiheneinbaugerätes 10 hindurchführen zu können. Der Funktionsanschluss 20 dient zum Anklemmen oder Befestigen eines Leiters am Reiheneinbaugerät 10. Die Verbindung Abdeckung-Schieber 43 ist in Fig. 2 dargestellt.

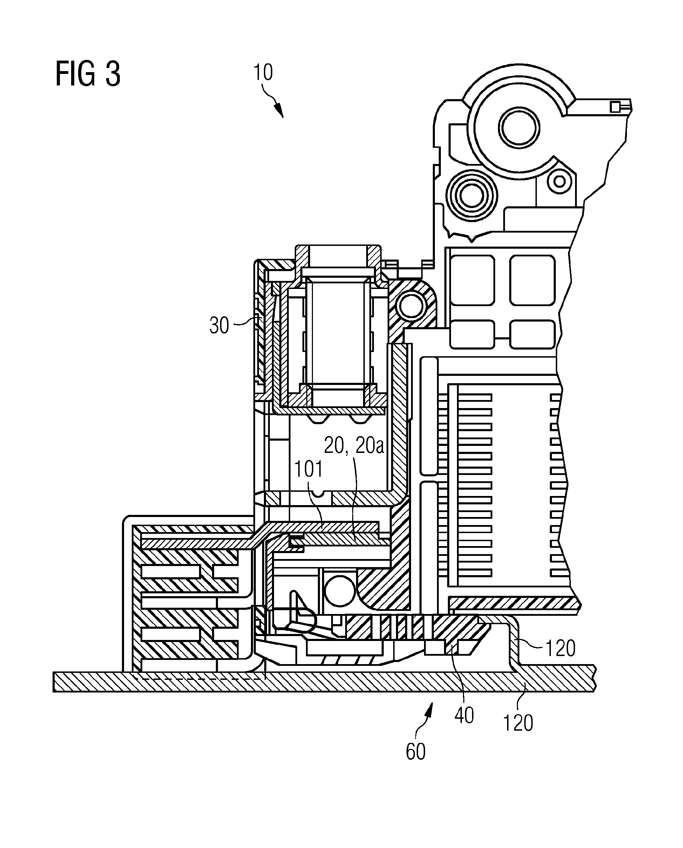

Fig. 3 zeigt schematisch eine Ausführungsform eines Reiheneinbaugerätes 10 mit einem Schieber 40 in verriegelter Position 60. Verriegelte Position 60 bedeutet, dass das Reiheneinbaugerät 10, insbesondere der Riegelabschnitt 46 des Reiheneinbaugerätes 10, an der Befestigungsschiene 120 verriegelt ist und dadurch das Reiheneinbaugerät 10 an der Befestigungsschiene 120 hält. In dem Reiheneinbaugerät 10 ist als Funktionsanschluss 20 ein Klemmenanschluss 20a angeordnet.

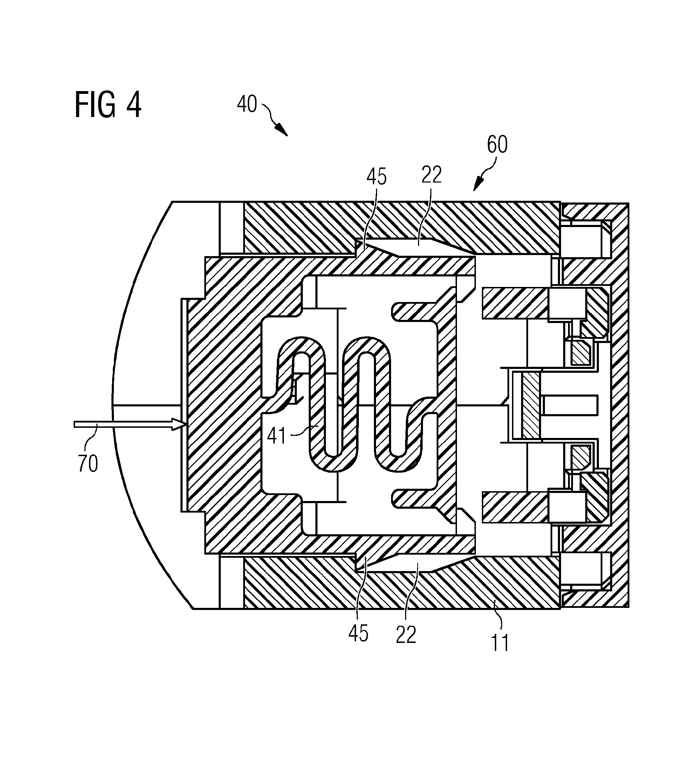

Fig. 4 zeigt in einer Draufsicht einen erfindungsgemäßen Schieber 40 in der verriegelten Position 60 relativ zu einem Reiheneinbaugerät 10. Der Schieber 40 weist an beiden Längsseiten jeweils als Befestigungseinrichtung 45 ein Rastelement auf. Diese Rastelemente 45 sind in entsprechende erste Gegenbefestigungseinrichtungen 22 des Reiheneinbaugerätes 10, insbesondere des Gehäuses 11 des Reiheneinbaugerätes 10, eingerastet. Hierdurch ist sichergestellt, dass der Schieber 40 nicht entgegen der Montagerichtung 70 des Schiebers 40 von dem Reiheneinbaugerät 10 entfernt werden kann. Im Zusammenspiel mit den ersten Gegenbefestigungseinrichtungen 22 des Reiheneinbaugerätes 10 halten die Rastelemente 45 den Schieber 40 in einer verliersicheren Position. Die Rastelemente 45 sind durch Vorsprünge gebildet, die eine Neigung aufweisen..

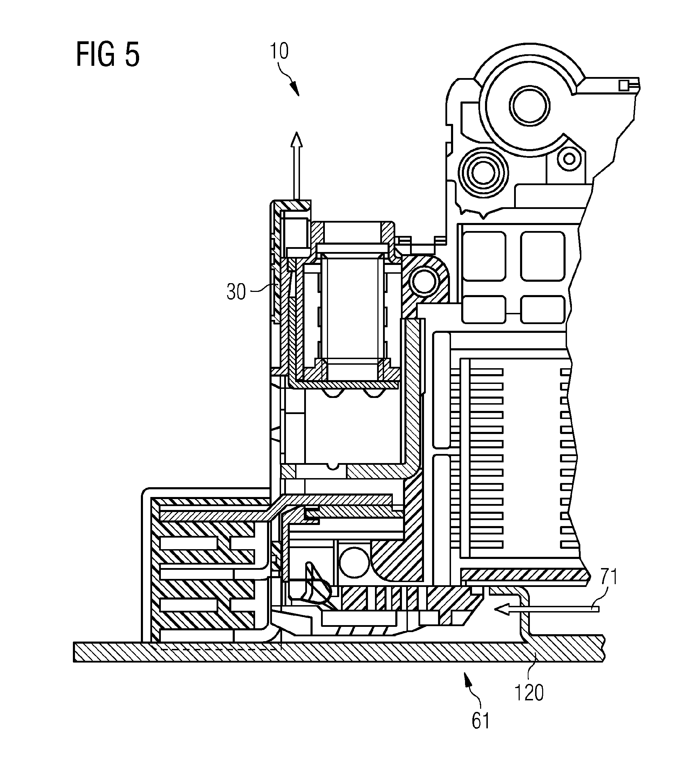

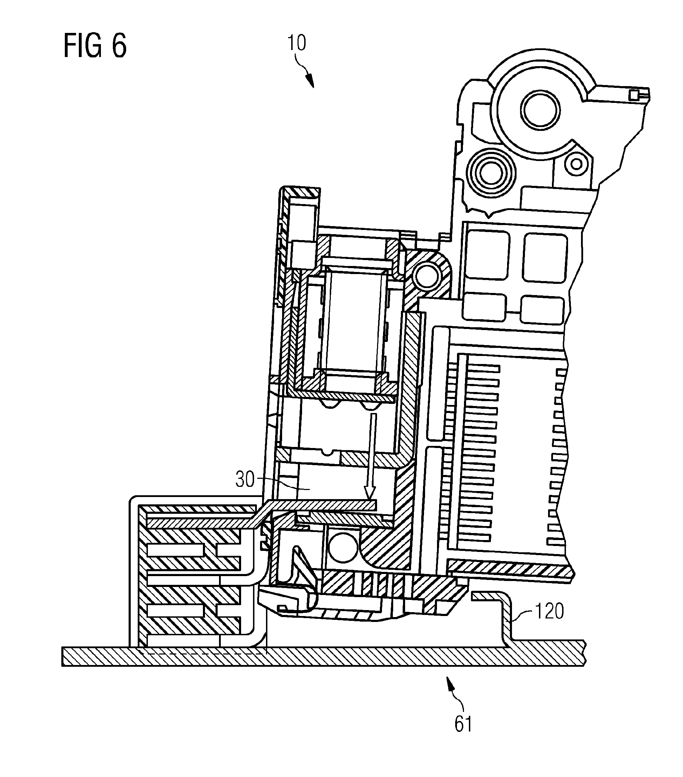

Fig. 5 zeigt schematisch das Reiheneinbaugerät 10 gemäß Fig. 3 während des Lösens des Schiebers 40 von der Befestigungsschiene 120 des Sammelschienenverbundes. Fig. 6 zeigt schematisch das Reiheneinbaugerät 10 gemäß Fig. 3 während des Lösens des Reiheneinbaugerätes 10 von dem Sammelschienenverbund. Der Schieber 40 wird in Fig. 5 in Demontagerichtung 71 geschoben beziehungsweise durch die Abdeckung 30 in Demontagerichtung 71 gezogen und wird dadurch von der Befestigungsschiene 120 entriegelt.

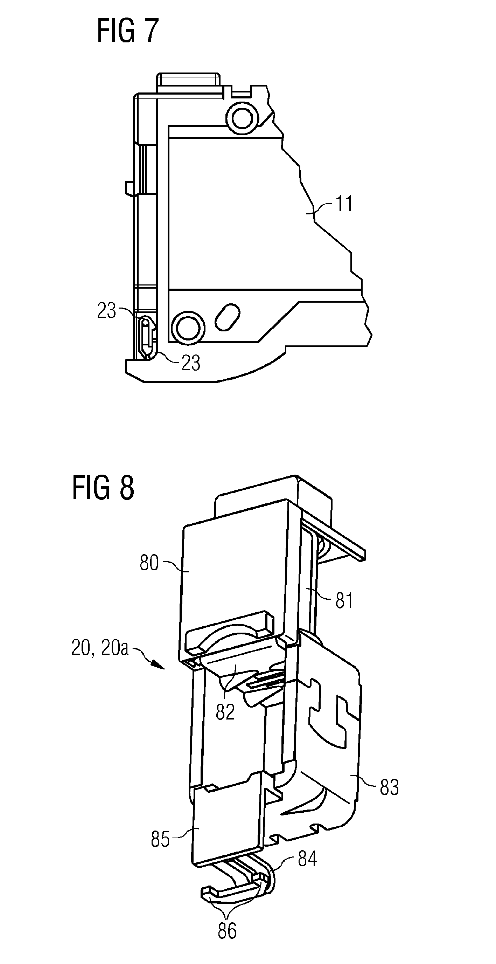

Fig. 7 zeigt Rastpositionen 23 des Schiebers 40 am Reiheneinbaugerät 10. Die Rastpositionen 23 dienen dazu, dass der Kunde/Installateur bei der Bedienung des Schiebers erkennt, ob er verriegelt oder entriegelt ist. In der verriegelten Position 60 lässt sich das Reiheneinbaugerät 10 nicht von einer Hutschiene 120 lösen, in der entriegelten Position 61 ist das Reiheneinbaugerät 10 von der Hutschiene 120 gelöst. Fig. 8 zeigt schematisch in einer perspektivischen Ansicht eine Doppelkammerklemme 20a. Die Doppelkammerklemme 20a weist einen Umgreifschutz 80, eine Klemmschraube 81, ein Druckstück 82, einen Klemmrahmen 83, eine Positionsfeder 84, einen Fehlsteckschutz 85 sowie Konturen 86 gegen Falschmontage der Doppelkammerklemme 20a an dem Reiheneinbaugerät 10 auf.

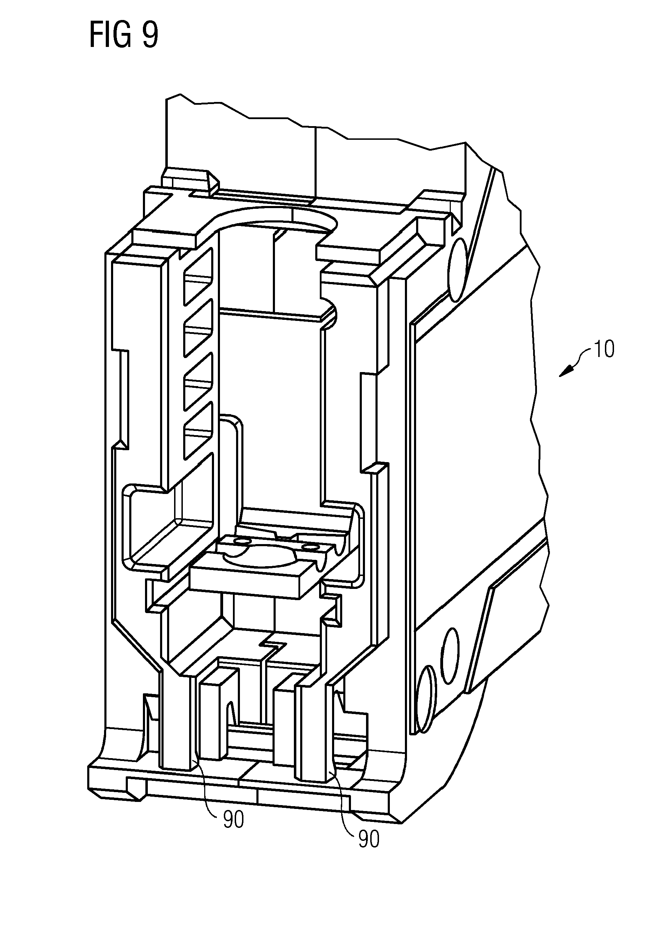

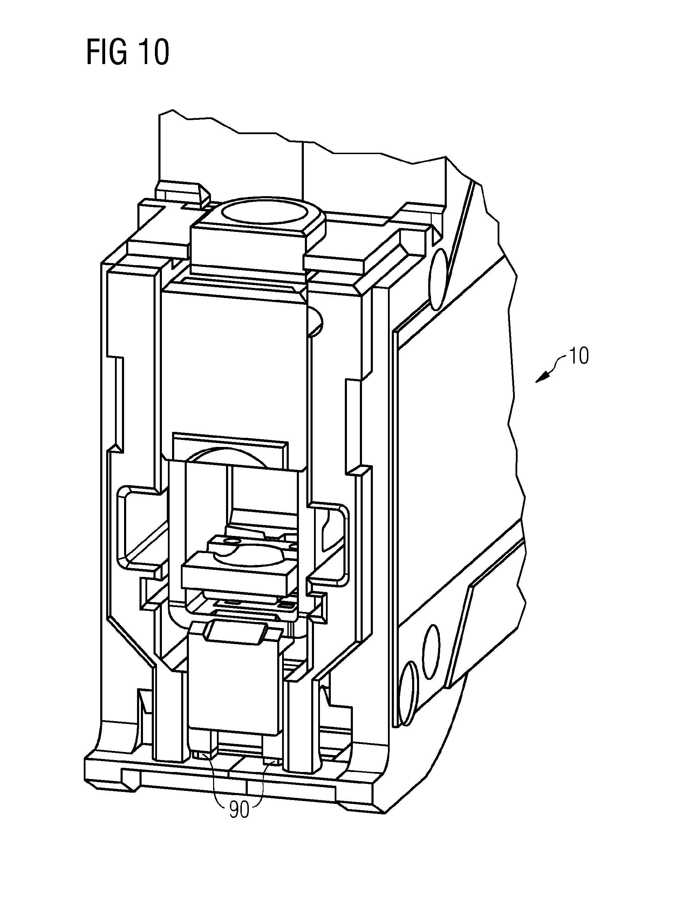

Fig. 9 zeigt schematisch in einer perspektivischen Ansicht ein Reiheneinbaugerät 10 ohne Funktionsanschluss 20, währenddessen Fig. 10 schematisch in einer perspektivischen Ansicht ein Reiheneinbaugerät 10 mit Funktionsanschluss 20 zeigt. In Fig. 9 sind Aufnahme 90 an dem Reiheneinbaugerät 10 für die Konturen 86 am Fehlsteckschutz 85 dargestellt. In Fig. 10 sitzt der Fehlsteckschutz 85 der Doppelkammerklemme 20a im Gehäuse 11 des Reiheneinbaugerätes 10 und positioniert dadurch die Doppelkammerklemme 20a am Reiheneinbaugerät 10.

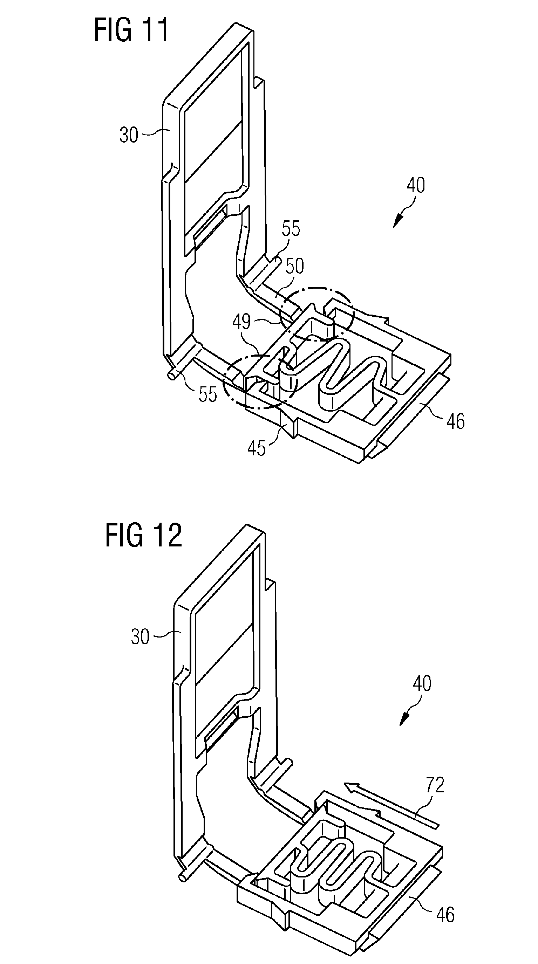

In den Fig. 11 und 12 ist ein Schieber 40 dargestellt, der einstückig die Abdeckung 30 des Funktionsanschlusses 20 aufweist. Die Abdeckung 30 ist über ein flexibles Schieberband 50 mit dem Schieber 40 verbunden. Das flexible Schieberband 50 kann ein Filmscharnier aufweisen. Über die Verrastkonturen 55 kann der Schieber 40 verschiedene Rastpositionen 23 am Gehäuse 11 des Reiheneinbaugerätes 10 einnehmen. Der einteiligen Schieber 40 kann insbesondere in einem sogenannten LOWCOST-Reiheneinbaugerät 10 Einsatz finden. Diese Variante des Schiebers 40 kann in der Fertigung nicht nachträglich montiert werden und der Kunde kann die Anschlusstechnik nicht wechseln - es bleiben aber folgende Vorteile bei diesem Schieber 40 vorhanden:
- kostengünstig,
- kraftloses Betätigen des Schiebers 40 von vorne möglich,
- das Reiheneinbaugerät 10 ist einfach aus dem Sammelschienenverbund lösbar,
- es existieren Rastpositionen 60, 61 zwischen Schieber 40 und Gehäuse 11 des Reiheneinbaugerätes 10.

Generell ist ein erfindungsgemäßer Schieber 40 nach der Montage in der Fertigung für den Kunden unverlierbar, da der Schieber 40 im Gehäuse 11 eines Reiheneinbaugerätes 10 sicher einschnappt. Der Schieber kann am Ende der Fertigung - also bei vernietetem Gerät - in das Reiheneinbaugerät 10 eingesetzt werden. Die spezielle Befestigungseinrichtung 45 am Schieber 40 sorgt in Zusammenwirkung mit der entsprechenden Gegenbefestigungseinrichtung 22, insbesondere Gehäusekonturen, für die Einnahme der verliersicheren Position des Schiebers 40 am Reiheneinbaugerät 10, wodurch für den Kunden beim Betätigen des Schiebers 40 erkennbar ist, ob sich dieser sicher in der verliersicheren Position befindet. Dabei kann die Flexibilität des Schieberbandes 50 ausgenutzt werden.

Der komplette Funktionsanschluss 20 mit Fehlsteckschutz 85 kann problemlos als Paket aus dem Reiheneinbaugerät 10 entnommen und auch wieder eingebaut werden, um die Anschlusstechnik von Klemmanschluss auf Ringkabelschuhanschluss zu wechseln. Die Konturen 86 am Fehlsteckschutz 85 des Funktionsanschlusses 20 und die Aufnahmen 90 am Gehäuse 11 des Reiheneinbaugerätes 10 sorgen dafür, dass das Klemmenpaket 20, 85 vom Anwender nicht falsch positioniert werden kann. Der Fehlsteckschutz 85 dient dabei zugleich der Positionierung des Funktionsanschlusses 20 im Reiheneinbaugerät 10.

Der Schieber 40 als Einzelteil kann unabhängig von der Klemmenabdeckung 30 beispielsweise bei einem vernieteten Reiheneinbaugerät 10 montiert werden. Für den Kunden ist der Schieber 40 nach der Montage verliersicher. Bei der Montage der Klemmenabdeckung 30 wird diese mit dem Schieber 40 sicher verbunden, aber ist bei Bedarf lösbar. Die Klemmenabdeckung 30 ist gleichzeitig die Betätigung des Schiebers 40 und ermöglicht dem Kunden ein kraftloses Betätigen des Schiebers 40. Über Rastpositionen 23 ist für den Kunden erkennbar in welcher Stellung sich der Schieber 40 befindet. Für die Rastposition 23 kann die Flexibilität des Schieberbandes 50 ausgenutzt werden. Durch die lösbare Verbindung zwischen Schieber 40 und Klemmenabdeckung 30 kann der Kunde die Anschlusstechnik 20 zwischen Klemmentechnik und Ringkabelschuh wechseln.

Das Klemmenpaket 20, 85 kann vom Kunden nicht falsch montiert werden - dies ist durch die Gestaltung des Fehlsteckschutzes 85 in Zusammenwirkung mit dem Gehäuse 11 des Reiheneinbaugerätes 10 gewährleistet. Ein erfindungsgemäßes Reiheneinbaugerät 10 weist nachfolgende Vorteile auf:
- einfache Montage von Schieber 40 und Klemmenabdeckung 30 an das Reiheneinbaugerät 10,
- kein Fehleinbau des Funktionsanschlusses 20 möglich,
- Schieber 40 und Klemmentechnik 20, 85 können in der Fertigung auch bei vernietetem Reiheneinbaugerät 10eingesetzt werden,
- der Kunde kann zwischen Klemmentechnik und Ringkabelschuh wechseln,
- werkzeugloses Betätigen des Schiebers 40 von vorne möglich,
- das Reiheneinbaugerät 10 ist aus dem Sammelschienenverbund lösbar und
- es existieren Rastpositionen 23 zwischen Schieber 40 und Gehäuse 11 des Reiheneinbaugerätes 10.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: modulares Reiheneinbaugerät
- 11: Gehäuse
- 20: Funktionsanschluss
- 20a: Klemmenanschluss
- 22: erste Gegenbefestigungseinrichtung
- 23: Verrastkontur/Rastpositionen am Gehäuse

- 30: Abdeckung/Schieberbetätigung
- 32: Öffnung
- 34: Verbindungsaufnahme

- 40: Schieber
- 41: Schieberfeder
- 42: Verbindungsmittel
- 43: Verbindung Abdeckung-Schieber
- 44: Abdeckungsabschnitt
- 45: Befestigungseinrichtung
- 46: Riegelabschnitt
- 47: Rasteinrichtungen
- 48: Rastaufnahmen
- 49: Einraststellen

- 50: flexibles Schieberband / Filmscharnier
- 55: Verrastkontur am Schieber

- 60: verriegelte Position
- 61: entriegelte Position

- 70: Montagerichtung des Schiebers
- 71: Richtung des Schiebers für Demontage des Reiheneinbaugerätes von der Befestigungsschiene
- 72: Spannrichtung des Riegelabschnitts

- 80: Umgreifschutz
- 81: Klemmschraube
- 82: Druckstück

- 83: Klemmrahmen
- 84: Positionsfeder
- 85: Fehlsteckschutz
- 86: Konturen gegen Falschmontage

- 90: Aufnahme für Fehlsteckschutz/Konturen gegen Falschmontage am Fehlsteckschutz

- 101: Sammelschiene

- 120: Befestigungsschiene / Hutschiene

## Patentansprüche

1. Schieber (40) für ein modulares Reiheneinbaugerät (10), welches für die Verwendung in einem Sammelschienenverbund ausgebildet ist, wobei der Schieber (40) zur Verriegelung des Reiheneinbaugerätes (10) an einer Befestigungsschiene (120) dient,
**dadurch gekennzeichnet,**
**dass** der Schieber (40) eine Befestigungseinrichtung (45) zum verliersicheren Befestigen des Schiebers (40) an dem Reiheneinbaugerät (10) aufweist.

2. Schieber (10) nach Anspruch 1,
**dadurch gekennzeichnet,**
**dass** die Befestigungseinrichtung (45) wenigstens ein Rastelement, insbesondere wenigstens einen Rastvorsprung, aufweist.

3. Schieber (10) nach Anspruch 2, **dadurch gekenn zeichnet**,
dass an jeder Seite des Schiebers (40) ein Rastelement (45) angeordnet ist.

4. Schieber (10) nach einem der vorangegangenen Ansprüche,
**dadurch gekennzeichnet,**
**dass** der Schieber (40) eine Schieberfeder (41) aufweist, die einstückig, insbesondere monolithisch, mit dem Schieber (40) ausgebildet ist, und dass der Schieber (40) einen Rahmen (45, 46, 48) und einen Abdeckungsabschnitt (44, 42, 47, 50, 55) aufweist, an dem eine Abdeckung (30) des Reiheneinbaugerätes (10) anordenbar ist, die relativ zueinander gegen die Federkraft der Schieberfeder (41) bewegbar sind.

5. Schieber (10) nach Anspruch 4,
**dadurch gekennzeichnet,**
**dass** der Abdeckungsabschnitt (44, 42, 47, 50, 55) Rasteinrichtungen (47) und der Rahmen (45, 46, 48) Rastaufnahmen (48) aufweisen, so dass der Abdeckungsabschnitt (44, 42, 47, 50, 55) mittels der Rasteinrichtungen (47) an den Rastaufnahmen (48) des Rahmens (45, 46, 48) entgegen der Federkraft der Schieberfeder (41) verrasten kann.

6. Modulares Reiheneinbaugerät (10) für die Verwendung in einem Sammelschienenverbund, aufweisend einen Funktionsanschluss (20) für den Anschluss eines Leiters, eine Abdeckung (30) des Funktionsabschlusses (20) mit einer Öffnung (32) für die Durchführung des Leiters und einen Schieber (40) zur Verriegelung des Reiheneinbaugerätes (10) an einer Befestigungsschiene (120),
**dadurch gekennzeichnet,**
**dass** der Schieber (40) gemäß einem der vorangegangenen Ansprüche ausgebildet ist und dass das Reiheneinbaugerät (10) wenigstens eine Gegenbefestigungseinrichtung (22) zum verliersicheren Befestigen des Schiebers (40) an dem Reiheneinbaugerät (10) aufweist.

7. Modulares Reiheneinbaugerät (10) nach Anspruch 6,
**dadurch gekennzeichnet,**
**dass** die Gegenbefestigungseinrichtung (22) komplementär zu der Befestigungseinrichtung (45) ausgebildet ist.

8. Modulares Reiheneinbaugerät (10) nach Anspruch 6 oder 7,
**dadurch gekennzeichnet,**
**dass** die Gegenbefestigungseinrichtung (22) als Rastaufnahme, insbesondere als Vertiefung, in einem Gehäuseteil (11) des Reiheneinbaugerätes (10) ausgebildet ist.

9. Modulares Reiheneinbaugerät (10) nach Anspruch 6 bis 8,
**dadurch gekennzeichnet,**
**dass** der Schieber (40) und die Abdeckung (30) miteinander lösbar verbunden sind.

10. Modulares Reiheneinbaugerät (10) nach Anspruch 6 bis 8,
**dadurch gekennzeichnet,**
**dass** der Schieber (40) und die Abdeckung (30) über ein flexibles Schieberband (50) miteinander verbunden sind.

11. Modulares Reiheneinbaugerät (10) nach einem der vorangegangenen Ansprüche 6 bis 10,
**dadurch gekennzeichnet,**
**dass** der Schieber (40) und die Abdeckung (30) einstückig, insbesondere monolithisch, ausgebildet sind.

12. Modulares Reiheneinbaugerät (10) nach einem der vorangegangenen Ansprüche 6 bis 11,
**dadurch gekennzeichnet,**
**dass** das Reiheneinbaugerät (10) Sichtfenster auf die Gegenbefestigungseinrichtungen (22) aufweist.

13. Modulares Reiheneinbaugerät (10) nach einem der vorangegangenen Ansprüche 6 bis 12,
**dadurch gekennzeichnet,**
**dass** der Funktionsanschluss (20) auswechselbar hinter der Abdeckung (30) angeordnet ist.

14. Modulares Reiheneinbaugerät (10) nach einem der vorangegangenen Ansprüche 6 bis 13,
**dadurch gekennzeichnet,**
**dass** der Funktionsanschluss (20) ein Klemmenanschluss (20a) oder ein Ringkabelschuhanschluss ist.

15. Sammelschienenverbund aufweisend wenigstens zwei modulare Reiheneinbaugeräte (10) mit den Merkmalen eines der Ansprüche 6 bis 14 und einer Befestigungsschiene (120), insbesondere in Form einer Hutschiene, in oder an welcher die Reiheneinbaugeräte (10) verriegelbar sind.
